# EUROPEAN PATENT APPLICATION

(11) **EP 3 576 070 A1**
(43) Date of publication of application: **04.12.2019**
(21) Application number: 18775468.4
(22) Date of filing: 20.03.2018
(51) Int. Cl.: G08G 1/16, B60R 21/00, G01C 21/26, G08G 1/09

(54) **DRIVE ASSISTANCE SYSTEM**

(30) Priority: 31.03.2017 JP 2017071184
(71) Applicant: Aisin AW Co., Ltd., Anjo-shi, Aichi 444-1192 (JP)
(72) Inventor: SAKAI, Takamitsu, Anjo-shi Aichi 444-1192 (JP)
(74) Representative: Cabinet Beau de Loménie
(86) International application number: PCT/JP2018/010995
(87) International publication number: WO 2018/180756

(57) **Abstract**

There is provided a drive assistance system that enables to provide more appropriate drive assistance using real-view superimposition display. Specifically, the configuration is such that future actions by each of a vehicle and another vehicle are predicted based on vehicle information obtained by each of the vehicle and the other vehicle; it is determined, based on the predicted future actions by the vehicle and the other vehicle, whether the future action by the other vehicle influences the future action by the vehicle; and the future action by the other vehicle having been determined to influence the future action by the vehicle is displayed so as to be superimposed on a real view.

## Description

### TECHNICAL FIELD

The present invention relates to a drive assistance system that provides vehicle drive assistance.

### BACKGROUND ART

In recent years, as one type of drive assistance for a vehicle, for example, JP 2009-64088 A has disclosed a drive assistance system that detects the locations, movement speeds, etc., of other vehicles located around a vehicle, using a camera, a sensor, etc., mounted on the vehicle, predicts future courses of the other vehicles based on results of the detection, and displays regions where any of the other vehicles is likely to take a course with a probability exceeding a predetermined value.

### CITATIONS LIST

### PATENT LITERATURE

Patent Literature 1: JP 2009-64088 A (pages 7 to 10 and FIG. 5)

### SUMMARY OF INVENTION

### TECHNICAL PROBLEMS

However, in the above-described Patent Literature 1, regions to which other vehicles are predicted to move in the future (hereinafter, referred to as movement-predicted regions) are displayed in a real view, and a plurality of movement-predicted regions serving as candidates are predicted based on the probabilities of other vehicles' future movement, and the predicted plurality of movement-predicted regions are displayed. In addition, since the movement-predicted regions are displayed without taking into account the influence on the vehicle, movement-predicted regions of other vehicles that do not influence travel of the vehicle are also displayed, and thus, a driver has needed to determine from a displayed image whether the other vehicles influence the vehicle.

The present invention is made to solve the above-described conventional problem, and provides a drive assistance system that enables to provide more appropriate drive assistance using real-view superimposition display.

### SOLUTIONS TO PROBLEMS

To provide the above-described drive assistance system, a drive assistance system according to the present invention includes action predicting means for predicting future actions taken by each of a vehicle and another vehicle, based on vehicle information obtained by each of the vehicle and the other vehicle; influence determining means for determining, based on the future actions by the vehicle and the other vehicle predicted by the action predicting means, whether the future action by the other vehicle influences the future action by the vehicle; and action displaying means for displaying the future action by the other vehicle having been determined by the influence determining means to influence the future action by the vehicle, such that the future action by the other vehicle is superimposed on a real view.

Note that the "vehicle" and the "another vehicle" do not indicate any specific vehicle, and each vehicle corresponds to any of vehicles included in the drive assistance system. Note also that the "another vehicle" may correspond to a plurality of vehicles.

### ADVANTAGEOUS EFFECTS OF INVENTION

According to the drive assistance system according to the present invention that has the above-described configuration, based on action predictions of individual vehicles made themselves, a future action by another vehicle that influences a future action by a vehicle is identified, and the future action by the other vehicle influencing the future action by the vehicle is displayed so as to be superimposed on a real view, and thus, it eliminates complicated display of predictions on other vehicles that do not influence travel of the vehicle, making it possible to provide a drive assistance system that enables to provide more appropriate drive assistance.

### BRIEF DESCRIPTION OF DRAWINGS

FIG. 1 is a schematic configuration diagram showing a drive assistance system according to the present embodiment.
FIG. 2 is a block diagram showing a configuration of the drive assistance system according to the present embodiment.
FIG. 3 is a diagram showing an example of action prediction information stored in an action prediction information DB.
FIG. 4 is a block diagram schematically showing a control system of a navigation device according to the present embodiment.
FIG. 5 is a flowchart of a drive assistance processing program according to the present embodiment.
FIG. 6 is a diagram showing exemplary guidance on a future action by another vehicle.
FIG. 7 is a flowchart of a sub-processing program for an influence level determination process.
FIG. 8 is a diagram showing an influence level determination table.
FIG. 9 is a diagram describing a case in which a course predicted based on a future action by a vehicle coincides with a course predicted based on a future action by another vehicle.

### DESCRIPTION OF EMBODIMENTS

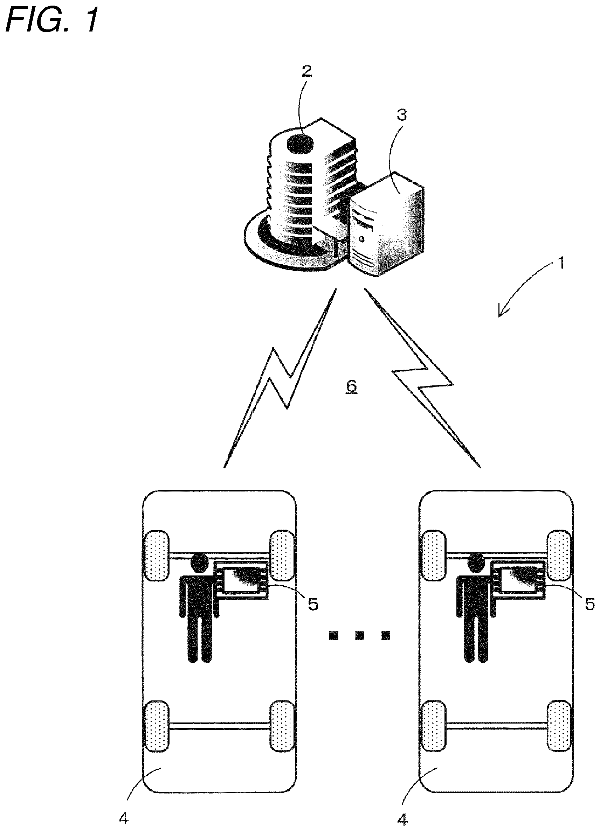

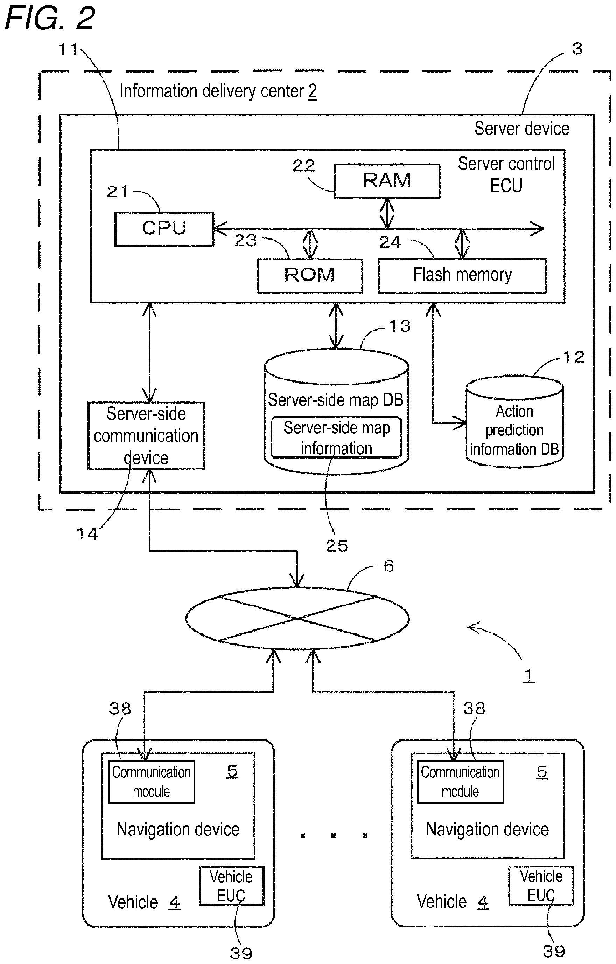

A drive assistance system according to the present invention will be described in detail below based on one embodiment that embodies the drive assistance system and with reference to the drawings. First, a schematic configuration of a drive assistance system 1 according to the present embodiment will be described using FIGS. 1 and 2. FIG. 1 is a schematic configuration diagram showing the drive assistance system 1 according to the present embodiment. FIG. 2 is a block diagram showing a configuration of the drive assistance system 1 according to the present embodiment.

As shown in FIG. 1, the drive assistance system 1 according to the present embodiment basically includes a server device 3 provided in an information delivery center 2; and navigation devices 5 which are communication terminals mounted on vehicles 4. In addition, the server device 3 and the navigation devices 5 are configured to be able to perform transmission and reception of electronic data with each other through a communication network 6. Note that instead of the navigation devices 5, for example, other in-vehicle devices or mobile phones, smartphones, tablet terminals, or personal computers that are connected to vehicles may be used.

Here, the server device 3 provided in the information delivery center 2 is an information delivery server that is installed on a country-by-country basis or on a district-by-district basis that divides a country (e.g., on a per city, ward, town, or village basis), and collects, from each vehicle traveling a target area, information that identifies a future action taken by the vehicle which is predicted by the vehicle (hereinafter, referred to as action prediction information), identifies, using the collected action prediction information, a vehicle whose future action is influenced by a future action by another vehicle, and delivers action prediction information of the other vehicle whose action has been determined to exert an influence, to the vehicle.

Note, however, that all of the above-described processes do not necessarily need to be performed by the server device 3, and some of the processes may be performed by a navigation device 5. For example, the navigation device 5 may determine whether a future action by another vehicle influences a future action by a vehicle having the navigation device 5 mounted thereon, by obtaining action prediction information of the other vehicle directly by vehicle-to-vehicle communication or through the server device 3, and comparing the action prediction information of the other vehicle with action prediction information of the vehicle.

Meanwhile, the navigation devices 5 each are an in-vehicle device mounted on a vehicle 4, and displays a map of an area around the location of the vehicle based on map data stored therein, displays a current vehicle location in a map image, or provides movement guidance along a set guidance route. Particularly, in the present embodiment, the navigation device 5 also displays a future action by another vehicle having been determined to influence a future action by the vehicle, such that the future action by the other vehicle is superimposed on a real view. Note that a detail of the navigation device 5 will be described later.

In addition, the communication network 6 includes multiple base stations disposed all over the country and telecommunications companies that manage and control the base stations, and is formed by connecting the base stations to the telecommunications companies by wire (optical fiber, ISDN, etc.) or wirelessly. Here, each base station includes a transceiver and an antenna that perform communication with navigation devices 5. While the base station performs radio communication with a telecommunications company, the base station serves as an end of the communication network 6 and plays a role in relaying communication of navigation devices 5 present in an area (cell) in which radio waves from the base station reach, to the server device 3.

Next, a configuration of the server device 3 in the drive assistance system 1 will be described in more detail using FIG. 2. The server device 3 includes, as shown in FIG. 2, a server control ECU 11; an action prediction information DB 12 connected to the server control ECU 11 and serving as information recording means; a server-side map DB 13, and a server-side communication device 14.

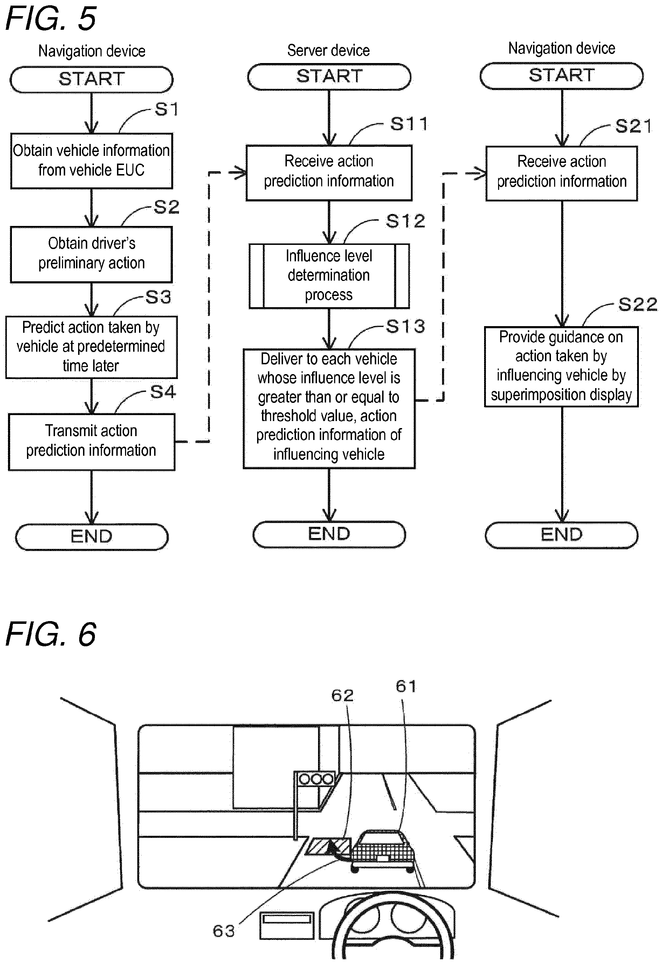

The server control ECU 11 (electronic control unit) is an electronic control unit that performs overall control of the server device 3, and includes a CPU 21 serving as a computing device and a control device; and internal storage devices such as a RAM 22 used as a working memory when the CPU 21 performs various types of arithmetic processing, a ROM 23 having recorded therein a drive assistance processing program (FIG. 5) which will be described later, etc., in addition to a program for control, and a flash memory 24 that stores a program read from the ROM 23. Note that the server control ECU 11 includes various types of means serving as processing algorithms with an ECU of a navigation device 5 which will be described later. For example, action predicting means predicts future actions taken by each of a vehicle and another vehicle, based on vehicle information obtained by each of the vehicle and the other vehicle. Influence determining means determines, based on the future actions by the vehicle and by the other vehicle predicted by the action predicting means, whether the future action by the other vehicle influences the future action by the vehicle. Action displaying means displays the future action by the other vehicle having been determined by the influence determining means to influence the future action by the vehicle, such that the future action by the other vehicle is superimposed on a real view.

In addition, the action prediction information DB 12 is storage means for cumulatively storing action prediction information collected from each vehicle 4 traveling a target area. Note that action prediction information is information that identifies a future action by a vehicle which is predicted based on vehicle information of the vehicle obtained by the vehicle itself. In the present embodiment, particularly, the action prediction information is information that identifies a future action taken by the vehicle at a predetermined time later (e.g., three seconds later), and includes the location and vehicle speed of the vehicle at the predetermined time later and specific content of an action predicted to be taken by the vehicle at the predetermined time later (e.g., a left or right turn, going straight ahead, or moving to another lane). In addition, as will be described later, when each vehicle predicts a future action, in the present embodiment, particularly, machine learning (deep learning) that uses a multi-layered convolutional neural network is used.

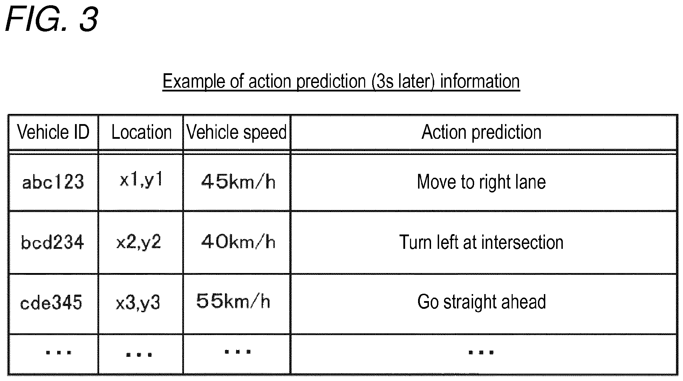

For example, FIG. 3 is an example of action prediction information stored in the action prediction information DB 12. As shown in FIG. 3, in the action prediction information DB 12, the location and vehicle speed of a vehicle at a predetermined time later and content of an action predicted to be taken by the vehicle are stored so as to be associated with a vehicle ID identifying the vehicle. For example, for a vehicle with the vehicle ID "abcl23", the location at the predetermined time later is (xl, yl), the vehicle speed at the predetermined time later is 45 km/h, and it is predicted that the vehicle will move to a right lane at the predetermined time later.

Then, by the server device 3 comparing the pieces of action prediction information stored in the action prediction information DB 12 between vehicles, the server device 3 identifies a vehicle whose future action is influenced by a future action by another vehicle. Then, action prediction information of the other vehicle whose action has been determined to exert an influence is delivered to the identified vehicle.

Meanwhile, the server-side map DB 13 is storage means for storing server-side map information 25 which is the latest version of map information registered based on input data from an external source and input operations. Here, the server-side map information 25 basically has the same configuration as map information stored in the navigation devices 5, and includes a road network and various types of information required for a route search, route guidance, and map display. The server-side map information 25 includes, for example, link data about roads (links), node data about node points, intersection data about each intersection, location data about locations such as facilities, map display data for displaying a map, search data for searching for a route, and retrieval data for retrieving a location.

Meanwhile, the server-side communication device 14 is a communication device for performing communication with each vehicle 4 whose action prediction information is to be collected and the navigation devices 5 through the communication network 6. In addition, the server-side communication device 14 can also receive traffic information including various pieces of information such as congestion information, regulation information, and traffic accident information which are transmitted from an Internet network or traffic information centers, e.g., a VICS (registered trademark: Vehicle Information and Communication System) center, in addition to the navigation devices 5.

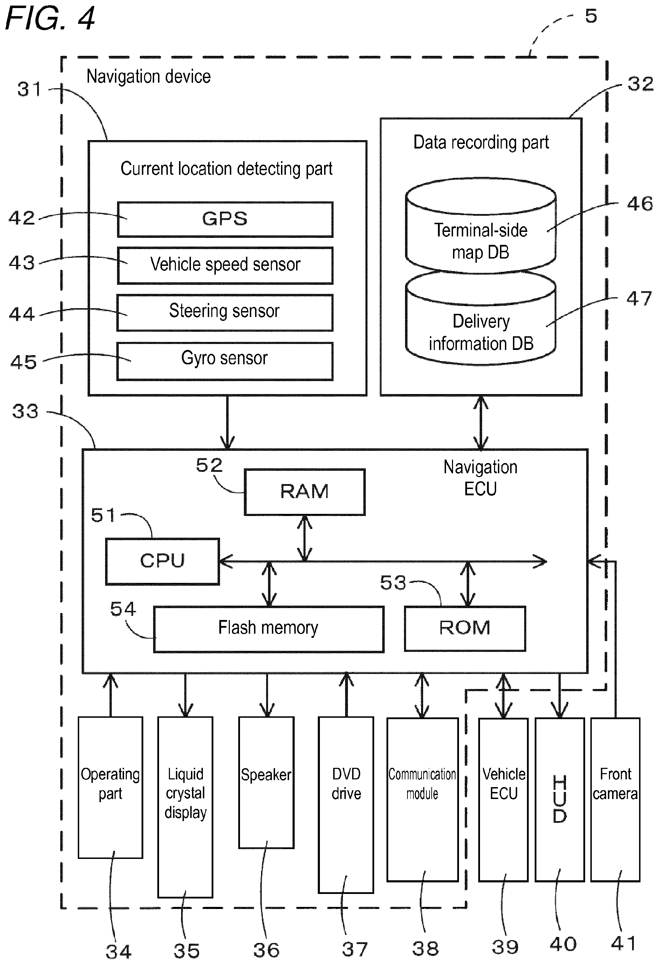

Next, a schematic configuration of a navigation device 5 will be described using FIG. 4. FIG. 4 is a block diagram schematically showing a control system of the navigation device 5 according to the present embodiment.

As shown in FIG. 4, the navigation device 5 according to the present embodiment includes a current location detecting part 31 that detects a current location of a vehicle 4 having the navigation device 5 mounted thereon; a data recording part 32 having various types of data recorded therein; a navigation ECU 33 that performs various types of arithmetic processing based on inputted information; an operating part 34 that accepts operations from a user; a liquid crystal display 35 that displays a map and a guidance route to a destination to the user; a speaker 36 that outputs audio guidance regarding route guidance; a DVD drive 37 that reads a DVD which is a storage medium; and a communication module 38 that performs communication with the server device 3, a VICS center, etc. In addition, a vehicle ECU 39, a HUD 40, a front camera 41, and the like, are connected to the navigation device 5 through an in-vehicle network such as CAN.

The components included in the navigation device 5 will be described in turn below.

The current location detecting part 31 includes a GPS 42, a vehicle speed sensor 43, a steering sensor 44, a gyro sensor 45, etc., and can detect a current vehicle location and orientation, vehicle travel speed, current time, etc. Here, particularly, the vehicle speed sensor 43 is a sensor for detecting the movement distance and vehicle speed of the vehicle, and generates pulses according to the rotation of drive wheels of the vehicle and outputs a pulse signal to the navigation ECU 33. Then, the navigation ECU 33 counts the generated pulses and thereby calculates the rotational speed of the drive wheels and movement distance. Note that the navigation device 5 does not need to include all of the above-described four types of sensors, and the navigation device 5 may be configured to include only one or a plurality of types of sensors among those sensors.

In addition, the data recording part 32 includes a hard disk (not shown) serving as an external storage device and a recording medium; and a recording head (not shown) which is a driver for reading a terminal-side map DB 46, a delivery information DB 47, a predetermined program, and the like, which are recorded on the hard disk, and writing predetermined data to the hard disk. Note that the data recording part 32 may be composed of a nonvolatile memory, a memory card, or an optical disc such as a CD or a DVD, instead of a hard disk.

Here, the terminal-side map DB 46 is storage means for storing map information used for a route search and travel guidance on the navigation device 5. Note that when map information is obtained from an external server, the terminal-side map DB 46 is not necessarily required.

In addition, the delivery information DB 47 is storage means for storing delivery information (assistance information about roads) delivered from the server device 3. Particularly, in the present embodiment, when it is determined that a future action by another vehicle influences a future action by the vehicle, action prediction information of the other vehicle having been determined to influence the future action by the vehicle is delivered from the server device 3 and stored in the delivery information DB 47.

Meanwhile, the navigation ECU (electronic control unit) 33 is an electronic control unit that performs overall control of the navigation device 5, and includes a CPU 51 serving as a computing device and a control device; and internal storage devices such as a RAM 52 that is used as a working memory when the CPU 51 performs various types of arithmetic processing and that stores route data obtained when a route is searched for, etc., a ROM 53 having recorded therein a drive assistance processing program (FIG. 5) which will be described later, etc., in addition to a program for control, and a flash memory 54 that stores a program read from the ROM 53.

The operating part 34 is operated when, for example, a point of departure which is a travel start point and a destination which is a travel end point are inputted, and includes a plurality of operating switches such as various types of keys and buttons (not shown). Then, based on switch signals outputted by, for example, depression of various switches, the navigation ECU 33 performs control to perform corresponding various types of operation. Note that the operating part 34 may include a touch panel provided on the front of the liquid crystal display 35. Note also that the operating part 34 may include a microphone and an audio recognition device.

In addition, on the liquid crystal display 35 there are displayed a map image including roads, traffic information, operation guidance, an operation menu, guidance on keys, a guidance route from a point of departure to a destination, guidance information along the guidance route, news, weather forecasts, time, e-mails, TV programs, etc.

In addition, the speaker 36 outputs audio guidance that provides guidance on travel along a guidance route or guidance on traffic information, based on an instruction from the navigation ECU 33.

In addition, the DVD drive 37 is a drive that can read data recorded on a recording medium such as a DVD or a CD. Then, based on the read data, for example, music or video is played back or the terminal-side map DB 46 is updated. Note that a card slot for performing reading and writing on a memory card may be provided instead of the DVD drive 37.

In addition, the communication module 38 is, for example, a communication device for receiving various information such as map update information, assistance information, and traffic information which are transmitted from the server device 3, a VICS center, a map delivery center, etc. The communication module 38 corresponds, for example, to a mobile phone or a DCM.

In addition, the vehicle ECU 39 is a control unit that performs various types of control for the vehicle such as an engine and brakes. In the present embodiment, the navigation device 5 obtains vehicle information which is a material for predicting a future action by the vehicle from the vehicle ECU 39.

Meanwhile, the HUD 40 is installed inside a dashboard of the vehicle 4, and includes therein a liquid crystal display or a screen which is a video display surface on which video is displayed. The HUD 40 is configured to allow the video displayed on the liquid crystal display or screen to be further reflected on a windshield in front of a driver's seat through a concave mirror, etc., included in the HUD 40 so that an occupant of the vehicle 4 can visually recognize the video. Note that the HUD 40 is configured such that when the occupant visually recognizes the video displayed on the liquid crystal display or screen and reflected on the windshield, the video displayed on the liquid crystal display or screen is visually recognized by the occupant as a virtual image in a position far ahead of the windshield instead of the position of the windshield. As a result, it becomes possible to allow the occupant to visually recognize the virtual image such that the virtual image is superimposed on a real view.

Note that the video displayed on the liquid crystal display or screen includes information about the vehicle and various types of information used to assist in occupant's driving. Particularly, in the present embodiment, a future action by another vehicle having been determined to influence a future action by the vehicle is displayed.

In addition, the front camera 41 is installed on top of a front bumper of the vehicle, on the back of a rearview mirror, etc., and is, for example, an imaging device using a solid-state imaging element such as a CCD. In addition, an optical-axis direction is set to be ahead in a vehicle's traveling direction. By performing image processing on a captured image which is captured by the front camera 41, a state of an environment ahead which is visually recognized by the occupant over the windshield (i.e., an environment on which a virtual image is superimposed), etc., are detected. Note that instead of the front camera 41, a sensor such as a millimeter-wave radar may be used.

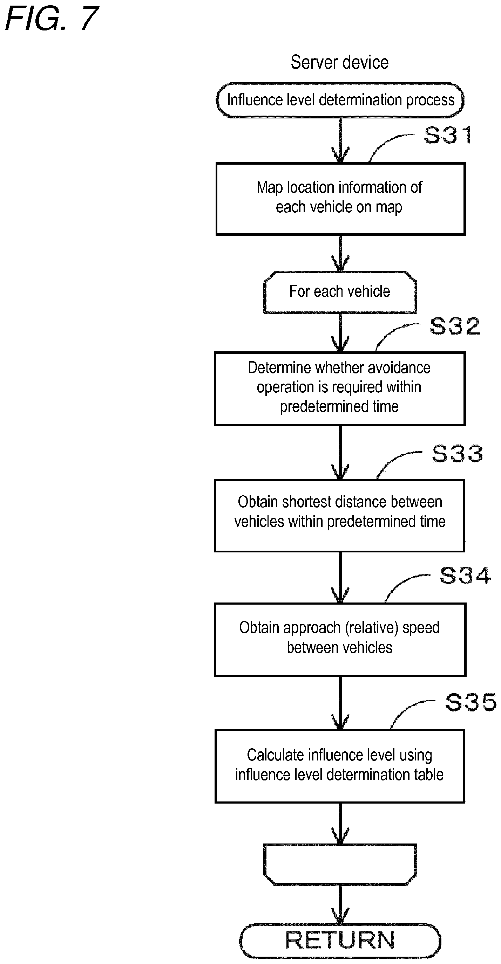

Next, a drive assistance processing program executed by the server device 3 and the navigation devices 5 in the drive assistance system 1 according to the present embodiment that has the above-described configuration will be described based on FIG. 5. FIG. 5 is a flowchart of the drive assistance processing program according to the present embodiment. Here, the drive assistance processing program is a program that is executed at predetermined intervals (e.g., at 1-second intervals) after turning on a vehicle's accessory (ACC) power supply, and that predicts a future action taken by each vehicle and provides various types of guidance based on the predicted future actions taken by the vehicles. In addition, the program shown in flowcharts in the following FIGS. 5 and 7 is stored in the RAM 22 or the ROM 23 included in the server device 3, the RAM 52 or the ROM 53 included in the navigation device 5, or the like, and executed by the CPU 21 or the CPU 51. Note that a navigation device 5 that performs processes at S1 to S4 and a navigation device 5 that performs processes at S21 and S22 may be identical navigation devices or may be different navigation devices 5.

First, a drive assistance processing program executed by a navigation device 5 will be described based on FIG. 5. First, in a machine learning processing program, at step (hereinafter, abbreviated as S) 1, the CPU 51 obtains vehicle information of a vehicle having the navigation device 5 mounted thereon from the vehicle ECU 39. Specifically, a "current vehicle speed", a "steering angle", and a "current location" are obtained. Note that all of the above-described three pieces of vehicle information do not necessarily need to be obtained, and only one or two pieces of vehicle information may be obtained. Note also that other vehicle information (e.g., acceleration and a guidance route) than the above-described three pieces of vehicle information, etc., may be obtained.

Then, at S2, the CPU 51 obtains a captured image obtained by capturing a driver with a camera installed in the vehicle, and obtains a driver's current action from the obtained captured image. Particularly, in the present embodiment, a preliminary action taken before a future action by the vehicle is to be obtained. For example, when the vehicle moves to another lane, generally, the driver visually checks beforehand behind and to the right or left, or visually checks a side mirror. Therefore, the action of visually checking behind and to the right or left or visually checking a side mirror corresponds to a preliminary action. Other examples of the preliminary action include a braking operation, an acceleration operation, a shift lever operation, a blinker operation, visually checking a rearview mirror, and visually checking to the right or left. Note that it is also possible to obtain the fact that a braking operation, an acceleration operation, or the like, is performed, from the vehicle ECU 39.

Subsequently, at S3, the CPU 51 predicts a future action by the vehicle, based on the vehicle information of the vehicle obtained at the above-described S1 and the driver's preliminary action obtained at S2. Specifically, a future action to be taken by the vehicle at a predetermined time later (e.g., three seconds later) is predicted. Particularly, in the present embodiment, it is desirable to predict a future action taken by the vehicle, using machine learning (deep learning) that uses a multi-layered convolutional neural network. By using the above-described machine learning, it becomes possible to make a more accurate prediction on a vehicle action as the learning level progresses.

In addition, in the prediction on a vehicle's action at the above-described S2, specifically, a prediction is made on the location and vehicle speed of the vehicle at the predetermined time later and specific content of an action predicted to be taken by the vehicle at the predetermined time later. In addition, for the content of an action, at least one of actions including a left or right turn, going straight ahead, and moving to another lane is predicted. Then, information indicating the predicted results is generated as action prediction information (see FIG. 3), and temporarily stored in the flash memory 54, etc.

At S4, the CPU 51 transmits the action prediction information generated at the above-described S3 to the server device 3. Note that the action prediction information includes a vehicle ID that identifies the vehicle which is the source. In addition, information about the current location and vehicle speed of the vehicle is also transmitted with the action prediction information. Note that the processes at the above-described S1 to S4 are repeatedly performed at predetermined time intervals by navigation devices 5 of vehicles traveling across the country, and generated pieces of action prediction information are sequentially transmitted to the server device 3.

Next, a drive assistance processing program executed by the server device 3 will be described based on FIG. 5. First, at S11, the CPU 21 receives pieces of action prediction information transmitted from vehicles traveling a target area. Then, as shown in FIG. 3, the received pieces of action prediction information are sequentially stored in the action prediction information DB 12 so as to be associated with vehicle IDs. Note that the target area may be the entire country or may be a specific map district (e.g., a city, a ward, a town, or a village).

Then, at S12, the CPU 21 performs an influence level determination process (FIG. 7) which will be described later. Note that the influence level determination process is a process of determining, for each vehicle in the target area, whether a future action by another vehicle influences a future action by the vehicle, based on the pieces of action prediction information obtained from the vehicles at the above-described S11. Specifically, for each vehicle in the target area, the level of influence (hereinafter, referred to as an influence level) of a future action by another vehicle on a future action by the vehicle is calculated. For example, when the vehicle is forced to perform a driving operation to avoid another vehicle (a deceleration operation, a turn operation, etc.), or when it is expected that the vehicle and another vehicle approach each other within a predetermined distance or approach each other at a predetermined speed or more, or when the courses of the vehicle and another vehicle coincide with each other, a high influence level is calculated for the target vehicles (the number of which is not limited to two and may be three or more).

Thereafter, at S13, the CPU 21 delivers to each vehicle whose influence level determined at the above-described S12 is greater than or equal to a threshold value (e.g., 50 or more), i.e., a vehicle whose future action has been determined to be influenced by a future action by another vehicle, action prediction information of the other vehicle (the number of which is not limited to one and may be two or more) whose action has been determined to exert an influence.

Next, the drive assistance processing program executed by a navigation device 5 will be described again based on FIG. 5. Note that processes at S21 and S22 are performed only by a navigation device 5 to which action prediction information has been delivered at the above-described S13.

First, at S21, the CPU 51 receives action prediction information transmitted from the server device 3.

Then, at S22, the CPU 51 displays, based on the action prediction information received at the above-described S21, a future action by another vehicle having been determined to influence a future action by the vehicle, such that the future action by the other vehicle is superimposed on a real view. Specifically, at least one of the predicted location and traveling direction of the other vehicle at the predetermined time later (e.g., three seconds later) is displayed.

For example, FIG. 6 is a diagram showing an example of a guidance mode for when guidance on a future action by another vehicle is provided at the above-described S22. For example, FIG. 6 is a diagram showing an example case in which it is predicted that on a road with a plurality of lanes on one side, another vehicle 61 traveling ahead of a vehicle in a lane on the right side of the vehicle and in the same direction as the vehicle moves to a lane on the left side (i.e., the lane on which the vehicle travels) at a predetermined time later. In this case, since a vehicle's course coincides with another vehicle's course, it is determined that a future action by the other vehicle 61 influences a future action by the vehicle, and thus, guidance on the future action by the other vehicle 61 is provided. Specifically, as shown in FIG. 6, each of a virtual image 62 of a location mark indicating the location of the other vehicle 61 at the predetermined time later and a virtual image 63 of an arrow indicating the traveling direction of the other vehicle 61 at the predetermined time later is created. Then, the virtual image 62 of the location mark is displayed so as to be superimposed on a road surface where the other vehicle 61 is expected to be actually located at the predetermined time later. In addition, the virtual image 63 of the arrow indicating the traveling direction is displayed so as to be superimposed on a road surface near the current location of the other vehicle 61. As a result, it becomes possible for an occupant to more accurately grasp the future action by the other vehicle in association with the real view.

Next, a sub-process of the influence level determination process performed at the above-described S12 will be described based on FIG. 7. FIG. 7 is a flowchart of a sub-processing program for the influence level determination process.

First, at S31, the CPU 21 maps, based on the pieces of action prediction information of the vehicles received at the above-described S11, predicted future locations of the vehicles whose pieces of action prediction information have been received, on a map. Note that the action prediction information is, as described above, information indicating a predicted future action taken by a vehicle at the predetermined time later (e.g., three seconds later), but it is desirable to map not only a location at the predetermined time later, but also pieces of location information for a period from the current time to the predetermined time later (i.e., an expected travel path or location coordinate sequence) by combining the information with information about the current location and vehicle speed of the vehicle.

Processes at subsequent S32 to S35 are performed for each vehicle whose action prediction information has been received at the above-described S31. Then, after performing the processes at S32 to S35 for all vehicles whose pieces of action prediction information have been received, processing transitions to S13.

At S32, the CPU 21 determines whether a processing-target vehicle needs to perform a driving operation to avoid another vehicle, by comparing the mapped location information and the action prediction information between the processing-target vehicle and other vehicles. For example, when the predicted locations of the processing-target vehicle and another vehicle coincide with each other at the same timing, or when the processing-target vehicle approaches another vehicle within a predetermined distance (e.g., within 3 m) in a forward-backward direction, it is determined that the processing-target vehicle needs to perform a driving operation to avoid the other vehicle. Note that the driving operation to avoid the other vehicle includes a deceleration operation of decelerating with a higher deceleration than a predetermined deceleration and a steering operation greater than or equal to a predetermined amount (more specifically, an operation to change a lane).

Subsequently, at S33, the CPU 21 obtains a distance (shortest distance) of closest approach of the processing-target vehicle and another vehicle within a predetermined time period, by comparing the mapped location information and the action prediction information between the processing-target vehicle and other vehicles.

Furthermore, at S34, the CPU 21 obtains an approach (relative) speed between the processing-target vehicle and another vehicle traveling at the closest location from the processing-target vehicle, by comparing the mapped location information and the action prediction information between the processing-target vehicle and other vehicles.

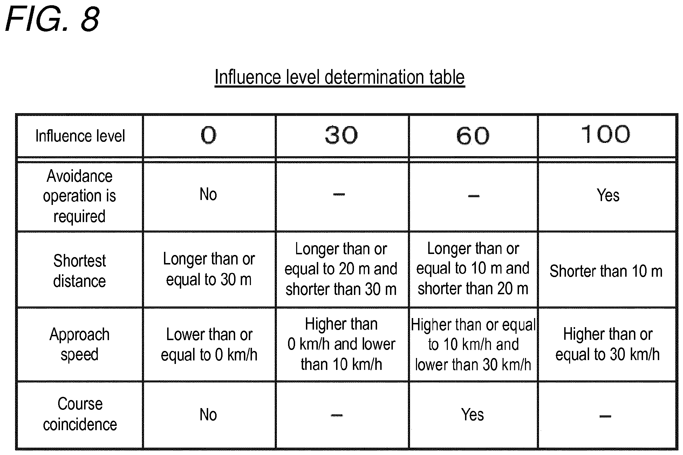

Thereafter, at S35, the CPU 21 calculates an influence level of the processing-target vehicle, based on each piece of information obtained at the above-described S31 to S34. Specifically, the influence level is calculated using an influence level determination table stored in the flash memory 24, etc. Here, FIG. 8 is a diagram showing an example of the influence level determination table.

As shown in FIG. 8, in the influence level determination table, each influence level is associated with information indicating whether a driving operation for avoidance is required which is determined at the above-described S32, the shortest distance from another vehicle which is calculated at the above-described S33, and an approach speed to another vehicle which is calculated at the above-described S34. Furthermore, the influence level is also set for information indicating whether a course predicted based on a future action by a vehicle coincides with a course predicted based on a future action by another vehicle. Note that the case in which "a course predicted based on a future action by a vehicle coincides with a course predicted based on a future action by another vehicle" includes, for example, a case in which the travel paths of the vehicle and the other vehicle during a period from the current time to the predetermined time later at least partially overlap or intersect with each other (a location relationship between the vehicles when the travel paths overlap or intersect with each other is any location relationship) and a case in which the travel lanes of the vehicle and the other vehicle become identical during a period from the current time to the predetermined time later. Note, however, that when the vehicle and the other vehicle are already traveling in the same lane at the present time or when the vehicle and the other vehicle are spaced a sufficient distance apart, the vehicles may be excluded from targets.

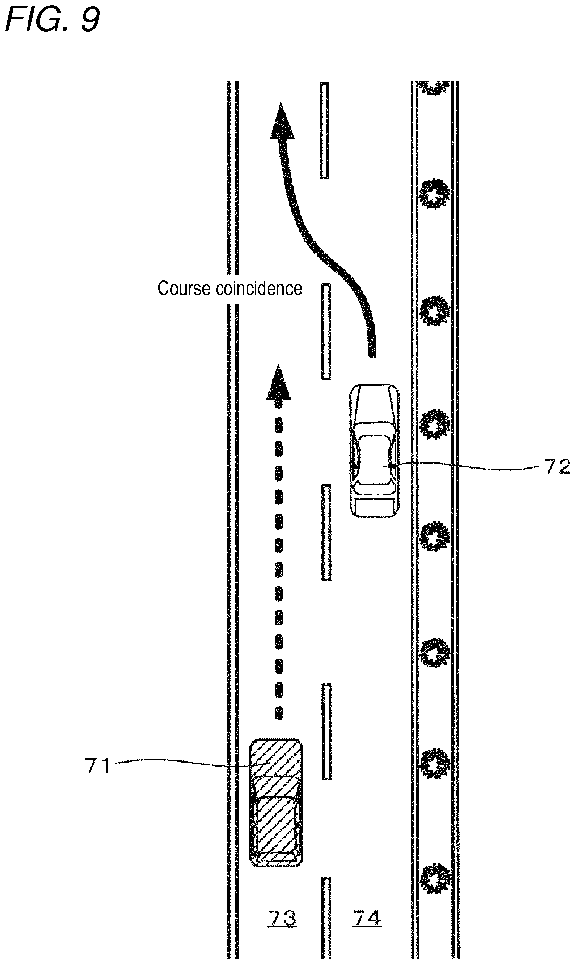

For example, as shown in FIG. 9, in a case in which a vehicle 71 and another vehicle 72 travel on a two-lane road on one side, when it is predicted that the vehicle 71 will continue to travel in a lane 73 in which the vehicle 71 currently travels, and the other vehicle 72 will change to the left lane 73 from a lane 74 in which the other vehicle 72 currently travels, it is determined that a course of the vehicle 71 coincides with a course of the other vehicle 72. Note that, though not shown in FIG. 9, for example, in a case in which the vehicle 71 and the other vehicle 72 travel on the two-lane road on one side, when it is predicted that the vehicle 71 will travel by changing to the right lane 74 from the lane 73 in which the vehicle 71 currently travels, and the other vehicle 72 will continue to travel in the lane 74 in which the other vehicle 72 currently travels, too, it is determined that a course of the vehicle 71 coincides with a course of the other vehicle 72. Furthermore, for example, in a case in which the vehicle 71 and the other vehicle 72 travel on the two-lane road on one side, when it is predicted that the vehicle 71 will travel by changing to the right lane 74 from the lane 73 in which the vehicle 71 currently travels, and the other vehicle 72 will change to the left lane 73 from the lane 74 in which the other vehicle 72 currently travels, too, it is determined that a course of the vehicle 71 coincides with a course of the other vehicle 72.

In addition, in the influence level determination table, a situation with a higher level of influence of a future action by another vehicle on a future action by a vehicle is associated with a higher influence level. For example, when the vehicle is forced to perform an operation of decelerating with a higher deceleration than a predetermined deceleration or a steering operation greater than or equal to a predetermined amount to avoid another vehicle, the level of influence of an action by the other vehicle is obviously higher than that for when such an operation is not forced, and thus, the influence level is also associated with a high value. In addition, since the shorter the distance between the vehicle and another vehicle, the higher the level of influence of an action by the other vehicle, the influence level is also associated with a higher value. In addition, since the higher the approach speed between the vehicle and another vehicle, the higher the level of influence of an action by the other vehicle, the influence level is also associated with a higher value. Furthermore, when a course predicted based on a future action by the vehicle coincides with a course predicted based on a future action by another vehicle, the level of influence of an action by the other vehicle is higher than that for when the courses do not coincide with each other, and thus, the influence level is also associated with a high value.

Then, at the above-described S35, for the processing-target vehicle, influence levels are identified for each of four factors included in the influence level determination table, and the highest one of the influence levels is calculated as the influence level of the processing-target vehicle. For example, when a driving operation to avoid another vehicle is not forced, the shortest distance from another vehicle is 25 m, the approach speed to another vehicle is 5 km/h, and there is no coincidence in course, the influence level is "30". Note that a value obtained by adding up influence levels for each factor or an average value of the influence levels may be calculated as a final influence level. Thereafter, processing transitions to S13, and to a vehicle whose calculated influence level is greater than or equal to a threshold value (e.g., 50 or more) is delivered action prediction information of another vehicle whose action has been determined to exert an influence (i.e., a vehicle that the vehicle needs to avoid, an approaching vehicle, a vehicle whose course coincides with a course of the vehicle, etc.).

As described in detail above, in the drive assistance system 1 according to the present embodiment, future actions by each of a vehicle and another vehicle are predicted based on vehicle information obtained by each of the vehicle and the other vehicle (S3), it is determined, based on the predicted future actions by the vehicle and the other vehicle, whether the future action by the other vehicle influences the future action by the vehicle (S13), and the future action by the other vehicle having been determined to influence the future action by the vehicle is displayed so as to be superimposed on a real view (S22), and thus, it eliminates complicated display of predictions on other vehicles that do not influence travel of the vehicle, making it possible to provide a drive assistance system that enables to provide more appropriate drive assistance.

Note that the present invention is not limited to the above-described embodiment and it is, of course, possible to make various modifications and alterations thereto without departing from the spirit and scope of the present invention.

For example, although in the present embodiment, in the process of predicting a future action taken by a vehicle (S3), a future action taken by a vehicle at a predetermined time later (e.g., three seconds later) is predicted, future actions taken by the vehicle during a period from the current time to the predetermined time later may be predicted. Alternatively, actions taken at a plurality of time points such as one second later, two seconds later, three seconds later, ... may be predicted.

In addition, although in the present embodiment, in the process of predicting a future action taken by a vehicle (S3), a future action by a vehicle is predicted based on vehicle information of the vehicle and a driver's preliminary action, it is also possible to make a prediction based on only the vehicle information of the vehicle or only the driver's preliminary action.

In addition, although in the present embodiment, as shown in FIG. 8, a determination as to whether a future action by another vehicle influences a future action by a vehicle is made taking into account all of the following: (1) whether a driving operation to avoid another vehicle is required; (2) the shortest distance from another vehicle; (3) an approach speed to another vehicle; and (4) whether there is coincidence between the courses of the vehicle and another vehicle, all of the above-described (1) to (4) do not necessarily need to be taken into account, and the determination may be made taking into account only some of them. For example, it is also possible that only (1) is taken into account and when a driving operation to avoid another vehicle is forced, it is determined that a future action by the other vehicle influences a future action by the vehicle. Alternatively, it is also possible that only (4) is taken into account and when the courses of the vehicle and another vehicle coincide with each other, it is determined that a future action by the other vehicle influences a future action by the vehicle.

In addition, although in the present embodiment, a future action by another vehicle is displayed by the HUD so as to be superimposed on a real view, for a guidance method for superimposing a future action by another vehicle on a real view, it is also possible to use a windshield display.

In addition, although in the present embodiment, in the process of predicting a future action taken by a vehicle (S3), as machine learning, particularly, machine learning (deep learning) that uses a multi-layered convolutional neural network is used, it is also possible to use other machine learning. In addition, it is also possible to make predictions without using machine learning.

In addition, although in the present embodiment, in the drive assistance program (FIG. 5), the processes at S1 to S3, S21, and S22 are performed by the navigation device 5 and the processes at S11 to S13 are performed by the server device 3, the process at S3 may also be performed by the server device 3. In that case, the server device 3 implements the "action predicting means" of the present invention, and the server device 3 having collected pieces of vehicle information of respective vehicles present in a target area predicts future actions taken by the respective vehicles, based on the collected pieces of vehicle information of the respective vehicles.

In addition, the processes at S12 and S13 may be performed by the navigation device 5. In that case, the navigation device 5 implements the "influence determining means" of the present invention, and determines, based on a future action predicted by the vehicle and a future action by another vehicle obtained from the other vehicle, whether the future action by the other vehicle influences the future action by the vehicle. Note that action prediction information about a future action by another vehicle may be directly obtained by vehicle-to-vehicle communication, or may be obtained through the server device 3. Particularly, when action prediction information is obtained by vehicle-to-vehicle communication, the server device 3 is not essential in the drive assistance system 1.

Furthermore, the configuration may be such that the processes at S1 to S3, S21, and S22 are not performed by the navigation device but are performed by an in-vehicle device other than the navigation device. For example, the vehicle ECU may perform the processes.

In addition, although an implementation example in which a drive assistance system according to the present invention is embodied is described above, the drive assistance system can also have the following configurations and in that case the following advantageous effects are provided.

For example, a first configuration is as follows:
A drive assistance system includes action predicting means (21, 51) for predicting future actions taken by each of a vehicle and another vehicle, based on vehicle information obtained by each of the vehicle and the other vehicle; influence determining means (21, 51) for determining, based on the future actions by the vehicle and the other vehicle predicted by the action predicting means, whether the future action by the other vehicle influences the future action by the vehicle; and action displaying means (51) for displaying the future action by the other vehicle having been determined by the influence determining means to influence the future action by the vehicle, such that the future action by the other vehicle is superimposed on a real view.

According to the drive assistance system having the above-described configuration, based on action predictions of individual vehicles made themselves, a future action by another vehicle that influences a future action by a vehicle is identified, and the future action by the other vehicle influencing the future action by the vehicle is displayed so as to be superimposed on a real view, and thus, it eliminates complicated display of predictions on other vehicles that do not influence travel of the vehicle, making it possible to provide a drive assistance system that enables to provide more appropriate drive assistance.

In addition, a second configuration is as follows:
The influence determining means (21, 51) determines the influence of the action, based on a distance or an approach speed between the vehicle and the other vehicle.

According to the drive assistance system having the above-described configuration, it becomes possible to accurately determine whether the future action by the other vehicle influences the future action by the vehicle, by taking into account a distance between the vehicles or a relative speed.

In addition, a third configuration is as follows:
When the vehicle is forced to perform a driving operation to avoid the other vehicle, the influence determining means (21, 51) determines that the future action by the other vehicle influences the future action by the vehicle.

According to the drive assistance system having the above-described configuration, it becomes possible to accurately determine whether the future action by the other vehicle influences the future action by the vehicle, by taking into account whether a driving operation to avoid the other vehicle is required.

In addition, a fourth configuration is as follows:
When the vehicle is forced to perform a deceleration operation of decelerating with a higher deceleration than a predetermined deceleration to avoid the other vehicle, the influence determining means (21, 51) determines that the future action by the other vehicle influences the future action by the vehicle.

According to the drive assistance system having the above-described configuration, it becomes possible to accurately determine whether the future action by the other vehicle influences the future action by the vehicle, by taking into account whether a deceleration operation to avoid the other vehicle is required.

In addition, a fifth configuration is as follows:
When the vehicle is forced to perform a steering operation greater than or equal to a predetermined amount to avoid the other vehicle, the influence determining means (21, 51) determines that the future action by the other vehicle influences the future action by the vehicle.

According to the drive assistance system having the above-described configuration, it becomes possible to accurately determine whether the future action by the other vehicle influences the future action by the vehicle, by taking into account whether a steering operation to avoid the other vehicle is required.

In addition, a sixth configuration is as follows:
When a course predicted based on the future action by the vehicle coincides with a course predicted based on the future action by the other vehicle, the influence determining means (21, 51) determines that the future action by the other vehicle influences the future action by the vehicle.

According to the drive assistance system having the above-described configuration, it becomes possible to accurately determine whether the future action by the other vehicle influences the future action by the vehicle, by taking into account coincidence between the courses of the vehicle and the other vehicle.

In addition, a seventh configuration is as follows:
The vehicle information is at least one of pieces of information including vehicle speed, steering angle, and location information, and the action predicting means (21, 51) predicts, based on the vehicle information, at least one of actions including a left or right turn, going straight ahead, and moving to another lane, as actions by the vehicle and the other vehicle.

According to the drive assistance system having the above-described configuration, it becomes possible to accurately identify what action to be taken by the vehicle in the future, using candidates including a left or right turn, going straight ahead, and moving to another lane. Therefore, a determination as to whether the future action by the other vehicle influences the future action by the vehicle can also be easily made.

In addition, an eighth configuration is as follows:
In addition to the vehicle information obtained by each of the vehicle and the other vehicle, actions by drivers driving the respective vehicles are also obtained, and the action predicting means (21, 51) predicts, based on the vehicle information and the actions by the drivers, future actions taken by each of the vehicle and the other vehicle.

According to the drive assistance system having the above-described configuration, it becomes possible to more accurately predict future actions by the vehicles by also taking into account actions by the drivers.

In addition, a ninth configuration is as follows:
The actions by the drivers driving the vehicles are preliminary actions taken before future actions by the respective vehicles are taken, and are obtained by capturing images of the drivers.

According to the drive assistance system having the above-described configuration, as the actions by the drivers, particularly, preliminary actions are targeted, by which it becomes possible to more accurately predict future actions taken by the vehicles.

In addition, a tenth configuration is as follows:
The future action by the other vehicle displayed by the action displaying means (51) so as to be superimposed on a real view is at least one of a predicted location and traveling direction of the other vehicle.

According to the drive assistance system having the above-described configuration, by providing guidance such that the predicted location or traveling direction of the other vehicle is superimposed on a real view, it becomes possible for the driver of the vehicle to more easily and visually grasp the predicted location or traveling direction of the other vehicle.

In addition, an eleventh configuration is as follows:
The action predicting means predicts future actions taken by each of the vehicle and the other vehicle by machine learning that uses a multi-layered neural network.

According to the drive assistance system having the above-described configuration, it becomes possible to more accurately predict future actions taken by the vehicles by machine learning that uses a multi-layered neural network.

In addition, a twelfth configuration is as follows:
The action predicting means is in-vehicle devices (5) that are mounted on the vehicle and the other vehicle, respectively, and that predict future actions based on vehicle information of the respective vehicles.

According to the drive assistance system having the above-described configuration, it becomes possible for the in-vehicle devices to predict future actions taken by the vehicle and the other vehicle.

In addition, a thirteenth configuration is as follows:
The influence determining means (21, 51) is a server device (3) that has collected, from the vehicle and the other vehicle, future actions predicted by the respective vehicles and that determines whether the future action by the other vehicle influences the future action by the vehicle, based on the future actions by the vehicle and the other vehicle.

According to the drive assistance system having the above-described configuration, it becomes possible for the server device to determine whether the future action by the other vehicle influences the future action by the vehicle.

In addition, a fourteenth configuration is as follows:
The influence determining means (21, 51) is an in-vehicle device (5) that is mounted on the vehicle and that determines, based on a future action predicted by the vehicle and a future action by another vehicle obtained from the other vehicle, whether the future action by the other vehicle influences the future action by the vehicle.

According to the drive assistance system having the above-described configuration, it becomes possible for the in-vehicle device to determine whether the future action by the other vehicle influences the future action by the vehicle.

In addition, a fifteenth configuration is as follows:
The action predicting means (21, 51) is a server device (3) that has collected, from the vehicle and the other vehicle, vehicle information of the respective vehicles and that predicts future actions by the vehicle and the other vehicle, based on the collected vehicle information of the respective vehicles.

According to the drive assistance system having the above-described configuration, it becomes possible for the server device to predict future actions taken by the vehicle and the other vehicle.

In addition, a sixteenth configuration is as follows:
The influence determining means (21, 51) is the server device (3) that determines, based on the predicted future actions by the vehicle and the other vehicle, whether the future action by the other vehicle influences the future action by the vehicle.

According to the drive assistance system having the above-described configuration, it becomes possible for the server device to determine whether the future action by the other vehicle influences the future action by the vehicle.

In addition, a seventeenth configuration is as follows:
The influence determining means (21, 51) is an in-vehicle device (5) that is mounted on the vehicle and that determines, based on a future action predicted by the vehicle and a future action by another vehicle obtained from the server device (3), whether the future action by the other vehicle influences the future action by the vehicle.

According to the drive assistance system having the above-described configuration, it becomes possible for the in-vehicle device to determine whether the future action by the other vehicle influences the future action by the vehicle.

### REFERENCE SIGNS LIST

1: Drive assistance system, 2: Information delivery center, 3: Server device, 4: Vehicle, 5: Navigation device, 12: Action prediction information DB, 21: CPU, 22: RAM, 23: ROM, 39: Vehicle ECU, 40: Front camera, 41: HUD, 51: CPU, 52: RAM, 53: ROM, and 62, 63: Virtual image

## Claims

1. A drive assistance system comprising:
action predicting means for predicting future actions taken by each of a vehicle and another vehicle, based on vehicle information obtained by each of the vehicle and the other vehicle;
influence determining means for determining, based on the future actions by the vehicle and the other vehicle predicted by the action predicting means, whether the future action by the other vehicle influences the future action by the vehicle; and
action displaying means for displaying the future action by the other vehicle having been determined by the influence determining means to influence the future action by the vehicle, such that the future action by the other vehicle is superimposed on a real view.

2. The drive assistance system according to claim 1, wherein the influence determining means determines the influence of the action, based on a distance or an approach speed between the vehicle and the other vehicle.

3. The drive assistance system according to claim 1 or 2, wherein when the vehicle is forced to perform a driving operation to avoid the other vehicle, the influence determining means determines that the future action by the other vehicle influences the future action by the vehicle.

4. The drive assistance system according to claim 3, wherein when the vehicle is forced to perform a deceleration operation of decelerating with a higher deceleration than a predetermined deceleration to avoid the other vehicle, the influence determining means determines that the future action by the other vehicle influences the future action by the vehicle.

5. The drive assistance system according to claim 3, wherein when the vehicle is forced to perform a steering operation greater than or equal to a predetermined amount to avoid the other vehicle, the influence determining means determines that the future action by the other vehicle influences the future action by the vehicle.

6. The drive assistance system according to any one of claims 1 to 3, wherein when a course predicted based on the future action by the vehicle coincides with a course predicted based on the future action by the other vehicle, the influence determining means determines that the future action by the other vehicle influences the future action by the vehicle.

7. The drive assistance system according to any one of claims 1 to 6, wherein the vehicle information is at least one of pieces of information including vehicle speed, steering angle, and location information, and
the action predicting means predicts, based on the vehicle information, at least one of actions including a left or right turn, going straight ahead, and moving to another lane, as actions by the vehicle and the other vehicle.

8. The drive assistance system according to any one of claims 1 to 7, wherein in addition to the vehicle information obtained by each of the vehicle and the other vehicle, actions by drivers driving the respective vehicles are also obtained, and
the action predicting means predicts, based on the vehicle information and the actions by the drivers, future actions taken by each of the vehicle and the other vehicle.

9. The drive assistance system according to claim 8, wherein the actions by the drivers driving the vehicles are preliminary actions taken before future actions by the respective vehicles are taken, and are obtained by capturing images of the drivers.

10. The drive assistance system according to any one of claims 1 to 9, wherein the future action by the other vehicle displayed by the action displaying means so as to be superimposed on a real view is at least one of a predicted location and traveling direction of the other vehicle.

11. The drive assistance system according to any one of claims 1 to 10, wherein the action predicting means predicts future actions taken by each of the vehicle and the other vehicle by machine learning that uses a multi-layered neural network.

12. The drive assistance system according to any one of claims 1 to 11, wherein the action predicting means is in-vehicle devices that are mounted on the vehicle and the other vehicle, respectively, and that predict future actions based on vehicle information of the respective vehicles.

13. The drive assistance system according to claim 12, wherein the influence determining means is a server device that has collected, from the vehicle and the other vehicle, future actions predicted by the respective vehicles and that determines whether the future action by the other vehicle influences the future action by the vehicle, based on the future actions by the vehicle and the other vehicle.

14. The drive assistance system according to claim 12, wherein the influence determining means is an in-vehicle device that is mounted on the vehicle and that determines, based on a future action predicted by the vehicle and a future action by another vehicle obtained from the other vehicle, whether the future action by the other vehicle influences the future action by the vehicle.

15. The drive assistance system according to any one of claims 1 to 11, wherein the action predicting means is a server device that has collected, from the vehicle and the other vehicle, vehicle information of the respective vehicles and that predicts future actions by the vehicle and the other vehicle, based on the collected vehicle information of the respective vehicles.

16. The drive assistance system according to claim 15, wherein the influence determining means is the server device that determines, based on the predicted future actions by the vehicle and the other vehicle, whether the future action by the other vehicle influences the future action by the vehicle.

17. The drive assistance system according to claim 15, wherein the influence determining means is an in-vehicle device that is mounted on the vehicle and that determines, based on a future action predicted by the vehicle and a future action by another vehicle obtained from the server device, whether the future action by the other vehicle influences the future action by the vehicle.
